# EUROPEAN PATENT APPLICATION

(11) **EP 3 598 346 A1**
(43) Date of publication of application: **22.01.2020**
(21) Application number: 19186175.6
(22) Date of filing: 12.07.2019
(51) Int. Cl.: G06N 3/04, G06N 3/08

(54) **SYSTEM AND METHOD FOR CHARACTERIZING AN ARBITRARY-LENGTH TIME SERIES USING PRE-SELECTED SIGNATURES**

(30) Priority: 17.07.2018 US 201816037606
(71) Applicant: Palo Alto Research Center Incorporated, Webster, NY 14580 (US)
(72) Inventor: GANGULI, Anurag, Milpitas, CA California 95035 (US)
(74) Representative: Lord, Michael

(57) **Abstract**

One embodiment provides a system for facilitating characterization of a time series of data associated with a physical system. During operation, the system determines one or more signatures, wherein a signature indicates a basis function for a known time series of data. The system trains a neural network based on the signatures as a known output. The system applies the trained neural network to the time series to generate a probability that the time series is characterized by a respective signature. The system enhances an analysis of the time series data and the physical system based on the probability.

## Description

This disclosure is generally related to characterizing time series data. More specifically, this disclosure is related to a system and method for characterizing a time series of arbitrary length using pre-selected signatures.

Time series data is a temporal sequence of real or categorical variables. That is, time series data is a series of data points indexed (or otherwise represented) in a temporal order and generally at successively equally spaced points in time. An example of time series data is power generated over time from a wind turbine. Analyzing time series data may be challenging due to the large dimensionality of the data and a lack of knowledge or variation in the time scales of interest. For example, one minute of time series data in the wind turbine example can include sample data recorded by a sensor which generates 1,000 samples per second, for a total of 60,000 samples. The dimensionality (i.e., massive volume) of this time series data can create challenges in analyzing the data. A lack of knowledge regarding which portions of the voluminous 60,000 samples may contain useful data can also create challenges in analyzing the data.

One embodiment provides a system for facilitating characterization of a time series of data associated with a physical system. During operation, the system determines, by a computing device, one or more signatures, wherein a signature indicates a basis function for a known time series of data. The system trains a neural network based on the signatures as a known output. The system applies the trained neural network to the time series to generate a probability that the time series is characterized by a respective signature. The system enhances an analysis of the time series data and the physical system based on the probability.

In some embodiments, the system applies the trained neural network to a first portion of the time series to generate, for each signature, a first probability that the time series is characterized by a respective signature, wherein the first portion has a first length and includes a first number of most recent entries of the time series. The system determines a second portion of the time series, wherein the second portion has a second length and includes a second number of most recent entries of the time series. The system reduces the second number of entries. The system applies the trained neural network to the reduced second number of entries to generate, for each signature, a second probability that the time series is characterized by a respective signature. The system characterizes the time series based on the first probability and the second probability.

In some embodiments, determining the second portion, reducing the second number of entries, and applying the trained neural network to the reduced second number of entries are in response to determining that a length of the first portion scaled by an integer is less than a total length of the time series. The system also sets the second portion as the first portion, and perturbs the integer. Characterizing the time series is further based on one or more second probabilities.

In some embodiments, the second number is equal to the first number scaled by an integer, reducing the second number of entries is based on the integer, and the time series is of an arbitrary length.

In some embodiments, the time series is of a fixed length.

In some embodiments, the network is trained based on one or more of: data generated from the signatures; an input which is a time series corresponding to a signature; and an output which is a one-hot vector of a size equal to a number of determined signatures, wherein a vector entry with a value equal to one corresponds to an index associated with a signature.

In some embodiments, the generated probability indicates a relative proportion or weight for each signature that the time series is characterized by the respective signature, and the relative proportion or weight is a comparison of the respective signature to all the determined signatures.

In some embodiments, the neural network is a recurrent neural network.
FIG. 1 illustrates an exemplary environment for facilitating characterization of an arbitrary-length time series, in accordance with an embodiment of the present invention.
FIG. 2 illustrates an exemplary environment for facilitating characterization of an arbitrary-length time series, in accordance with an embodiment of the present invention.
FIG. 3 illustrates exemplary time series data, in accordance with an embodiment of the present invention.
FIG. 4 illustrates exemplary signatures, in accordance with an embodiment of the present invention.
FIG. 5 illustrates training an exemplary network based on known signatures, in accordance with an embodiment of the present invention.
FIG. 6 illustrates determining a probability vector given a fixed-length time series and a signature detector, based on the exemplary signatures in FIG. 4, in accordance with an embodiment of the present invention.
FIG. 7 illustrates a characterization of an arbitrary-length time series using a signature detector and a downsampler module, in accordance with an embodiment of the present invention.
FIG. 8 presents a flow chart illustrating a method for facilitating characterization of an arbitrary-length time series, in accordance with an embodiment of the present invention.
FIG. 9 presents a flow chart illustrating a method for facilitating characterization of an arbitrary-length time series, in accordance with an embodiment of the present invention.
FIG. 10 illustrates an exemplary distributed computer and communication system that facilitates characterization of an arbitrary-length time series, in accordance with an embodiment of the present invention.

The following description is presented to enable any person skilled in the art to make and use the embodiments, and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, the present invention is not limited to the embodiments shown, but is to be accorded the widest scope consistent with the principles and features disclosed herein.

### Overview

The embodiments described herein solve the problem of effectively analyzing a high volume of time series data. Time series data is a temporal sequence of real or categorical variables, e.g., a series of data points indexed (or otherwise represented) in a temporal order. Time series data is generally taken at successively equally spaced points in time. An example of time series data is power generated over time from a wind turbine. Analyzing time series data may be challenging due to the large dimensionality of the data and a lack of knowledge or variation in the time scales of interest. For example, one minute of time series data in the wind turbine example can include sample data recorded by a sensor which generates 1,000 samples per second, for a total of 60,000 samples. The dimensionality (i.e., massive volume) of this time series data can create challenges in analyzing the data. A lack of knowledge regarding which portions of the voluminous 60,000 samples may contain useful data can also create challenges in analyzing the data effectively.

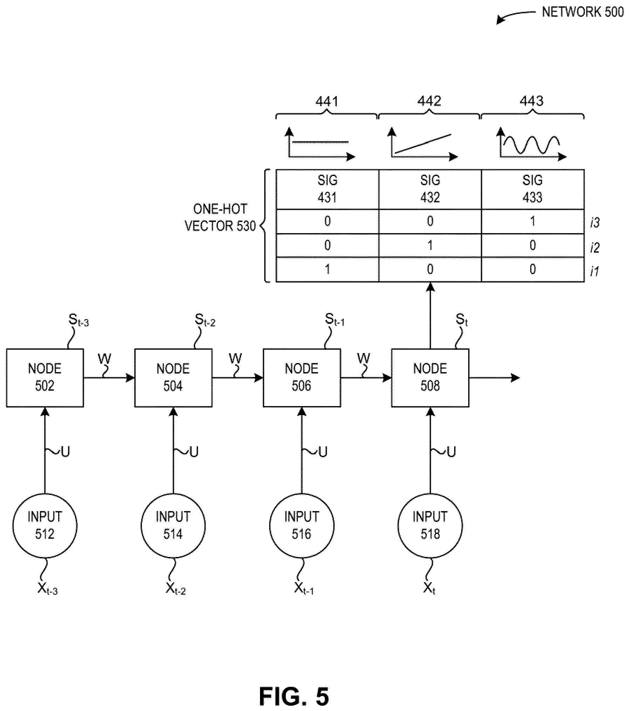

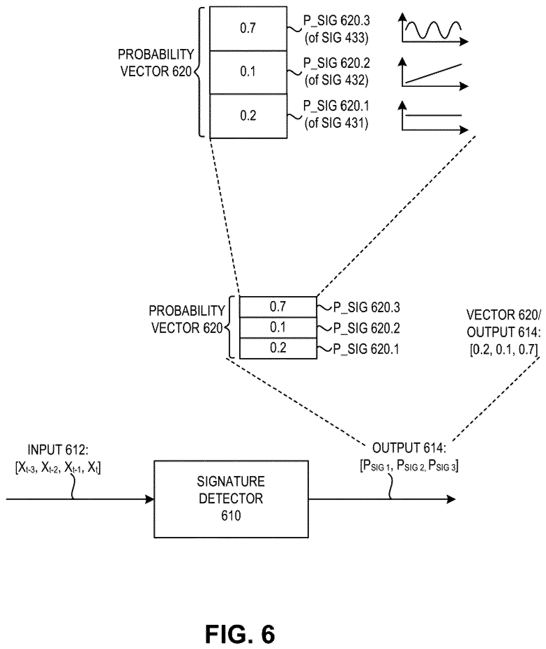

The embodiments described herein address these challenges by providing a signature detector system which identifies the relative proportions of known signatures in a fixed-length time series, and further characterizes an arbitrary-length time series based on the signature detector. The system trains a recurrent neural network based on pre-selected known signatures and training data. Subsequently, the system uses as input into the trained recurrent neural network time series data of a fixed length, and generates as output a probability for each signature that the time series is characterized by a respective signature. Training a recurrent neural network is described below in relation to FIG. 5, and generating a probability vector based on the "signature detector" is described below in relation to FIG. 6.

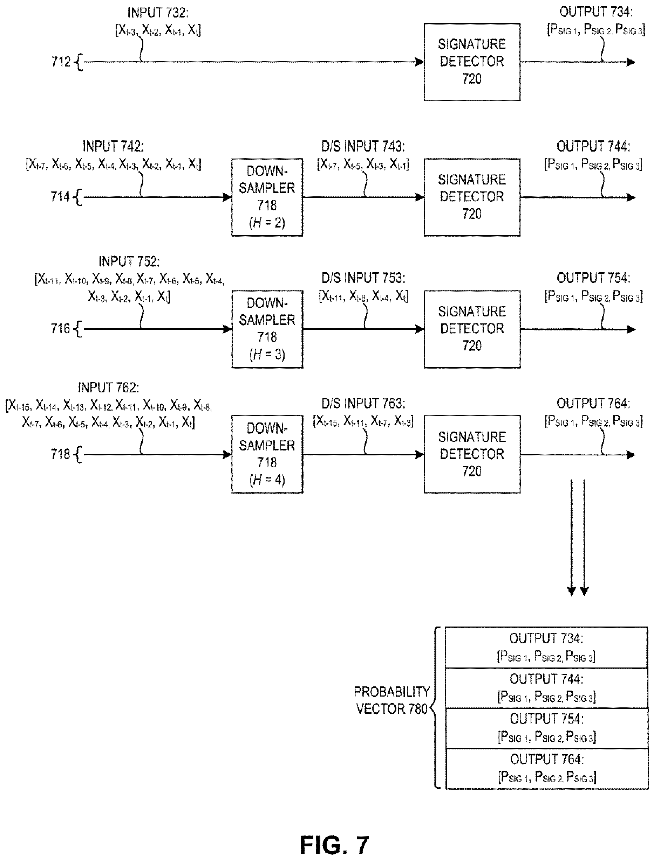

The system can then use the signature detector to characterize an arbitrary-length time series by sequentially using as an input time series set an increasing number of entries which are downsampled to a fixed length. In this case, the output of the signature detector is a number of probability vectors for each sequential input time series set, where each vector includes a probability that for each signature that the arbitrary-length time series is characterized by a respective signature. Characterizing an arbitrary-length time series using the signature detector and a downsampling module are described below in relation to FIG. 7.

Thus, the embodiments described herein provide a computer system which improves the efficiency of analyzing a massive set of time series data associated with a physical system, where the improvements are fundamentally technological. The improved efficiency can include a signature detector which identifies relative proportions of known signatures in a fixed-length time series, where the signature detector may be used to characterize an arbitrary-length time series data. The computer system provides a technological solution (i.e., a method for characterizing an arbitrary-length time series of data associated with a physical system based on pre-selected signatures) to the technological problem of analyzing voluminous time series data associated with a physical system. This technological solution enhances an analysis of a massive volume of time series data, and can increase both the efficiency and effectiveness of the physical system.

In the embodiments described herein, a user of a computer system can use fixed-length time series data associated with physical objects to determine relative weights of known signatures (e.g., the signature detector whose output is visualized as a probability vector), and subsequently alter a physical feature associated with the physical object being measured. Furthermore, the user can use the signature detector to determine the relative weights of the known signatures, and again alter a physical feature associated with the physical object being measured. The user can also make any alteration to improve the efficiency and effectiveness of the physical system, based on the output of the signature detector and characterization of an arbitrary-length time series of data associated with the physical system.

### Exemplary Environment and Communication

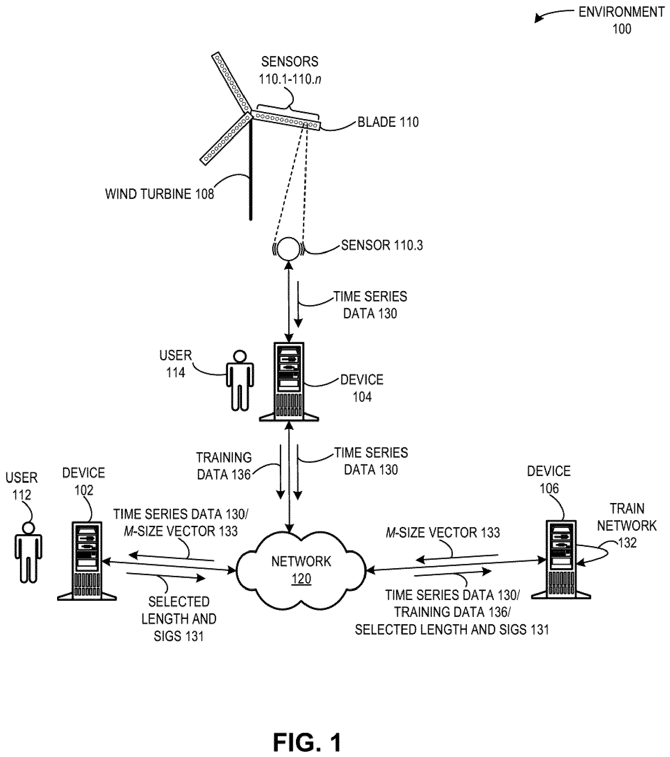

FIG. 1 illustrates an exemplary environment 100 for facilitating characterization of an arbitrary-length time series, in accordance with an embodiment of the present invention. Environment 100 can include: a device 102 and an associated user 112; a device 104 and an associated user 114; and a device 106. Devices 102, 104, and 108 can communicate with each other via a network 120. Environment 100 can also include a physical object with sensors which can record data over a period of time and at periodic intervals. For example, the physical object can be a wind turbine 108 with multiple blades, such as a blade 110 with multiple sensors 110.1-110.n. Each sensor can record and transmit data to another device. For example, sensor 110.3 can send a time series data 130 to device 104, which can send time series data 130 to devices 102 and 106. Upon receiving time series data 130, device 102, via user 112, can select a "fixed" length of time series data 130, select one or more signatures, and transmit selected length and signatures 131 to device 106. A signature can indicate a basis function for a time series of data, and device 102, via user 112, may select any number *M* of signatures which may be of interest or appropriate based on a strategy for analyzing the data. Device 104, via user 114, can also generate and send training data 136 to device 106.

Thus, upon receiving time series data 130, training data 136, and selected length and signatures 131, device 106 can train a recurrent neural network (train network function 132), where each input time series corresponds to one signature. The output is an *M*-size vector 133, which is a one-hot vector of a size *M,* where the vector entry equal to one corresponds to the index associated with the signature. Device 106 can generate and send *M-*size vector 133 back to device 102 for further analysis.

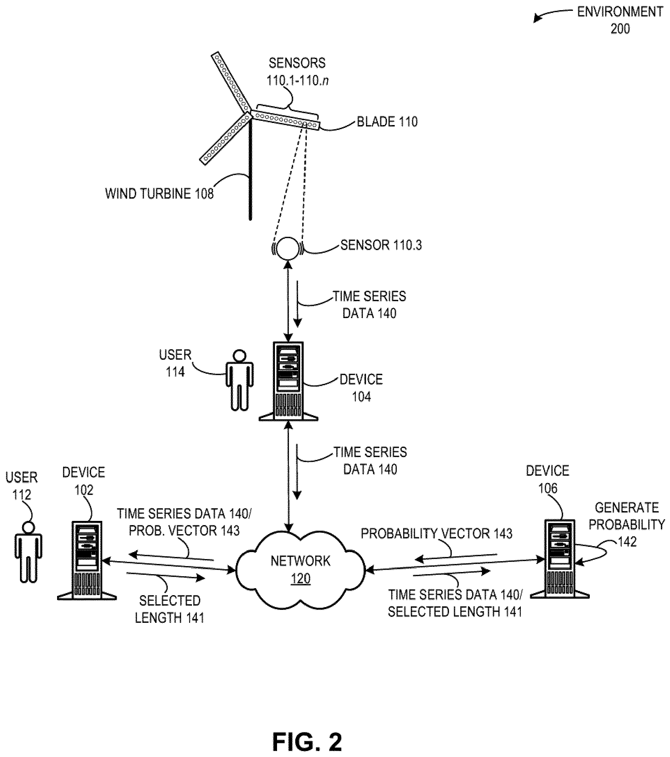

Subsequently, the recurrent neural network may be used to generate a probability vector (also of size *M*) given a fixed size input, where the relative probabilities indicate the relative weight of a corresponding signature for the input data. FIG. 2 illustrates an exemplary environment 200 for facilitating characterization of an arbitrary-length time series, in accordance with an embodiment of the present invention. In environment 200, sensor 110.3 can record and send time series data 140 to devices 102, 104, and 106. Upon receiving time series data 140, device 102, via user 112, can select a length *L* of time series data 140 and transmit a selected length 141 to device 106.

Upon receiving both time series data 140 and selected length 141, device 106 can use the previously trained recurrent neural network (described above in relation to FIG. 1) to generate a probability vector (generate probability vector function 142). Device 106 can send a probability vector 143 back to device 102 for further analysis. Probability vector 143 can be an M-size vector with relative probabilities which indicate the relative weight for each signature that time series data 140 is characterized by the respective signature.

### Exemplary Time Series Data and Signatures

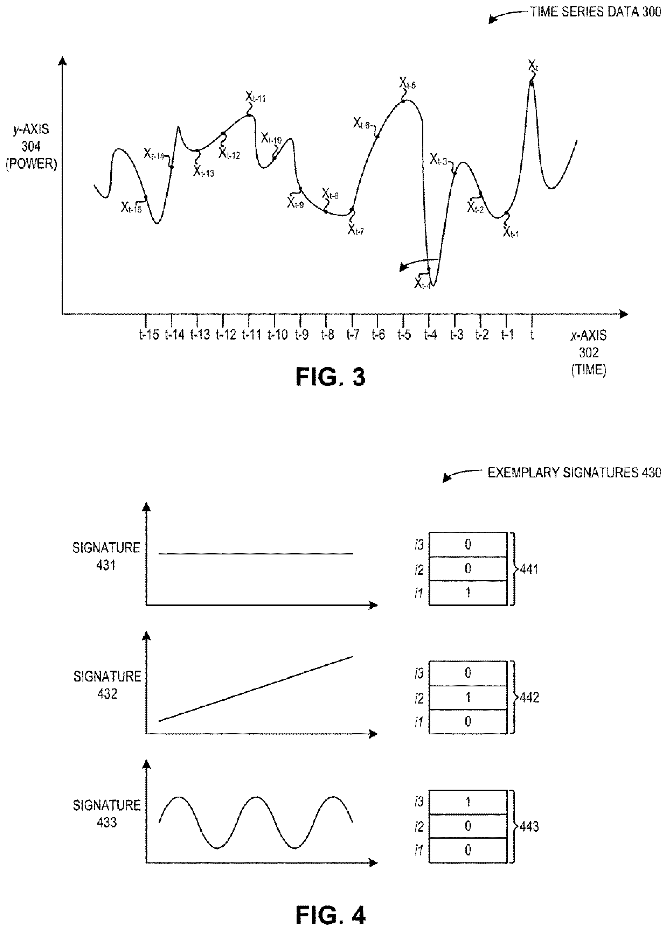

FIG. 3 illustrates exemplary time series data 300, in accordance with an embodiment of the present invention. Time series data 300 can correspond to data gathered over a period of time from a physical sensor, such as sensor 110.3 of blade 110 of wind turbine 108. FIG. 3 includes an x-axis 302 representing time, and a *y*-axis 304 representing power (e.g., power produced by blade 110.3). Time is marked on the x-axis by [(t-15), (t-14), (t-13), ..., (t)], while the data corresponding to a respective time is marked as [(Xₜ₋₁₅), (Xₜ₋₁₄), (Xₜ₋₁₃), ... , (Xₜ)]. Time series data 300 varies over time in a non-linear fashion. The embodiments described herein provide a first method for a signature detector which identifies the relative proportions of known signatures in a fixed-length time series data, and a second method which uses the signature detector to characterize an arbitrary-length time series data.

FIG. 4 illustrates exemplary signatures 430, in accordance with an embodiment of the present invention. Exemplary signatures 430 can include signatures 431, 432, and 433. Signature 431 can be a direct current (DC) signal, or a constant signal that does not change over time. Signature 432 can be a ramp signal which increases over time at a constant slope. Signature 433 can be a sinusoidal signal of a certain frequency (e.g., 3 hertz), or an alternating (AC) signal.

The three signatures 431, 432, and 433 may be represented in a one-hot vector of size *M* = three. In a respective signature vector, the vector entry with a value equal to one corresponds to the index of the respective signature. For example: signature 431 may have a respective signature vector 441 with index values [*i1*, *i2, i3*] = [1, 0, 0]; signature 432 may have a respective signature vector 442 with index values [*i1*, *i2, i3*] = [0, 1, 0]; and signature 433 may have a respective signature vector 443 with index values [*i1*, *i2, i3*] = [0, 0, 1]. Signatures 431, 432, and 433 are discussed below in the exemplary probability vector of FIG. 7.

### Identifying the Relative Proportions of Known Signatures

FIG. 5 illustrates training an exemplary network 500 based on known signatures, in accordance with an embodiment of the present invention. Network 500 can be a recurrent neural network, with nodes 502, 504, 506, and 508, and corresponding respective inputs 512, 514, 516, and 518. Each node can have an input and an output. For example, a current node 506 has a first input of (*W* ^{∗} Sₜ₋₂) from node 504, and a second input of (*U* ^{∗} Xₜ₋₁) from input 516. Node 506 can have an output which is a non-linear function of the first input and the second input. That is: Sₜ₋₁ = g(*W*^{∗}Sₜ₋₂ + *U*^{∗}Xₜ₋₁). The term "g" indicates a non-linear function. The term "Sₜ₋₂" is an input which is the output from the previous node. The terms *U* and *W* represent parameters which are consistent at each step of the recurrent neural network. The term "Xₜ₋₁" is another input to the current node.

Network 500 may be trained using synthetic or training data. The system can select a length *L* of a given time series (e.g., time series 300), and also select *M* known signatures (e.g., *M* = 3, the three signatures of FIG. 4). The system uses the training data as multiple input time series of length *L*, given the known output of a one-hot vector 530 corresponding to signatures 431, 432, and 433. Training network 500 can subsequently determine an appropriate value for *U.*

Upon training network 500, a time series of a fixed length *L* may be passed in as input to generate a probability vector of a size *M.* FIG. 6 illustrates determining a probability vector 620 given a fixed-length time series 612 and a signature detector 610, in accordance with an embodiment of the present invention. The system can pass into signature detector 610 the input 612 of a length L = 4: [(Xₜ₋₃), (Xₜ₋₂), (Xₜ₋₁), (Xₜ)], and generate an output 614 of [P_{sig_1}, P_{sig_2}, P_{sig_3}]. Output 614 corresponds to a probability vector 620 of size *M* = 3: [(p_sig 620.1, p_sig 620.2, p_sig 620.3]. "p_sig 620.1" is the relative probability that the given input time series 612 can be characterized by the corresponding signature 431. Similarly, "p_sig 620.2" is the relative probability that the given input time series 612 can be characterized by the corresponding signature 432, and "p_sig 620.3" is the relative probability that the given input time series 612 can be characterized by the corresponding signature 433. Probability vector 620 (and output 614) can have a value such as: [0.2, 0.1, 0.7].

Thus, by identifying the relative proportion of known signatures, the system provides a signature detector whose output is a probability vector with components representing the known signatures. The system characterizes a fixed-length time series based on the known signatures. This characterization can guide a user or other client to effect improvements to increase the efficiency of another system. For example, in the wind turbine example, the system can use a fixed-length reading from sensor 110.3 to determine relative proportions of certain known signatures (as a probability vector), and, based on the probability vector, the user can subsequently modify a speed, size, direction, or other feature of blade 110 or another feature relating to the readings taken by sensor 110.3. The embodiments described herein allow a user to modify a physical feature associated with the physical object being measured, which provides a concrete technological solution to a technological problem by enhancing the analysis of a voluminous amount of time series data.

### Characterizing Times Series Data of an Arbitrary Length

FIG. 7 illustrates a characterization of an arbitrary-length time series using a signature detector 720 and a downsampler module 718, in accordance with an embodiment of the present invention. FIG. 7 includes operations in a temporal sequence, indicated by times 712, 714, 716, and 718. The system can take a time series of an arbitrary length Q (as in time series data 300 of FIG. 3). The system can select the latest L entries of the time series and generate the M-size probability vector using the signature detector previously described in relation to FIGs. 5 and 6.

At time 712, the system can pass into signature detector 720 the input 732 of a length *L* = 4: [(Xₜ₋₃), (Xₜ₋₂), (Xₜ₋₁), (Xₜ)], and generate an output 714 of [P_{sig_1}, P_{sig_2}, P_{sig_3}]. Output 714 is similar to probability vector 620, in that the size *M* = 3 and characterizes the time series based on the relative probabilities for the M signatures.

Subsequently, the system can select the latest *H* * *L* entries of the time series, where H is any positive integer, and reduce (i.e., downsample) the selected entries by a factor of *H* to obtain *L* entries. The system can again generate an *M*-size probability vector. The system can continue to increase *H* and repeat the selecting, reducing, and generating steps until *H* * *L* is greater than the arbitrary length *Q.*

Specifically, at time 714, the system can set *H* = 2, and select the latest 2 * 4 = 8 entries of the time series. The system can pass into downsampler module 718 the input 742 with *H* * *L* = 8 entries: [(Xₜ₋₇), (Xₜ₋₆), (Xₜ₋₅), (Xₜ₋₄), (Xₜ₋₃), (Xₜ₋₂), (Xₜ₋₁), (Xₜ)]. Downsampler module 718 can use any downsampling algorithm to reduce the number of entries by a factor of *H* to obtain *L* entries. The system can subsequently send to signature detector 720 the downsampled input 743 of a length *L* = 4: [(Xₜ₋₇), (Xₜ₋₅), (Xₜ₋₃), (Xₜ₋₁)], and generate an output 744 of [P_{sig_1}, P_{sig_2}, P_{sig_3}].

At time 716, the system can increase *H* by 1 and set *H* = 2 + 1 = 3, and select the latest 3 * 4 = 12 entries of the time series. The system can pass into downsampler module 718 the input 752 with *H* * *L* = 12 entries: [(Xₜ₋₁₁), (Xₜ₋₁₀), (Xₜ₋₉), (Xₜ₋₈), (Xₜ₋₇), (Xₜ₋₆), (Xₜ₋₅), (Xₜ₋₄), (Xₜ₋₃), (Xₜ₋₂), (Xₜ₋₁), (Xₜ)]. The system can subsequently send to signature detector 720 the downsampled input 753 of a length *L* = 4: [(Xₜ₋₁₁), (Xₜ₋₈), (Xₜ₋₄), (Xₜ₋₁)], and generate an output 754 of [P_{sig_1}, P_{sig_2}, P_{sig_3}].

At time 718, the system can increase *H* by 1 and set *H* = 3 + 1 = 4, and select the latest 4 * 4 = 16 entries of the time series. The system can pass into downsampler module 718 the input 762 with *H* * *L* = 16 entries: [(Xₜ₋₁₅), (Xₜ₋₁₄), (Xₜ₋₁₃), (Xₜ₋₁₂), (Xₜ₋₁₁), (Xₜ₋₁₀), (Xₜ₋₉), (Xₜ₋₈), (Xₜ₋₇), (Xₜ₋₆), (Xₜ₋₅), (Xₜ₋₄), (Xₜ₋₃), (Xₜ₋₂), (Xₜ₋₁), (Xt)]. The system can subsequently send to signature detector 720 the downsampled input 763 of a length L = 4: [(Xₜ₋₁₅), (Xₜ₋₁₁), (Xₜ₋₇), (Xₜ₋₃)], and generate an output 764 of [P_{sig_1}, P_{sig_2}, P_{sig_3}].

The system can determine that increasing *H* again leads to *H* * *L* being greater than *Q* (i.e., 5 * 4 > 16). The collection of the M-size probability vectors (i.e., outputs 734, 744, 754, and 764) is a probability vector 780 which characterizes the time series of arbitrary length *Q* = 16 given the selected *M* = 3 signatures.

Thus, by using the signature detector of FIGs. 6 and 7, the system can characterize an arbitrary-length time series based on the known signatures. This characterization can allow a user or other client to effect improvements to increase the efficiency of a physical system. For example, in the wind turbine example, the system can take an arbitrary-length time series of data from sensor 110.3. The system can determine a characterization of the time series by using as input an increasing and downsampled number of entries and generating as output multiple probability vectors which each indicate the relative proportions of certain known signatures. Based on these probability vectors, the user can subsequently modify a speed, size, direction, or other feature of blade 110 or another feature relating to the readings taken by sensor 110.3, thus enhancing both the analysis of voluminous time series data and the performance of the physical system.

### Method for Characterizing Time Series Data of an Arbitrary Length

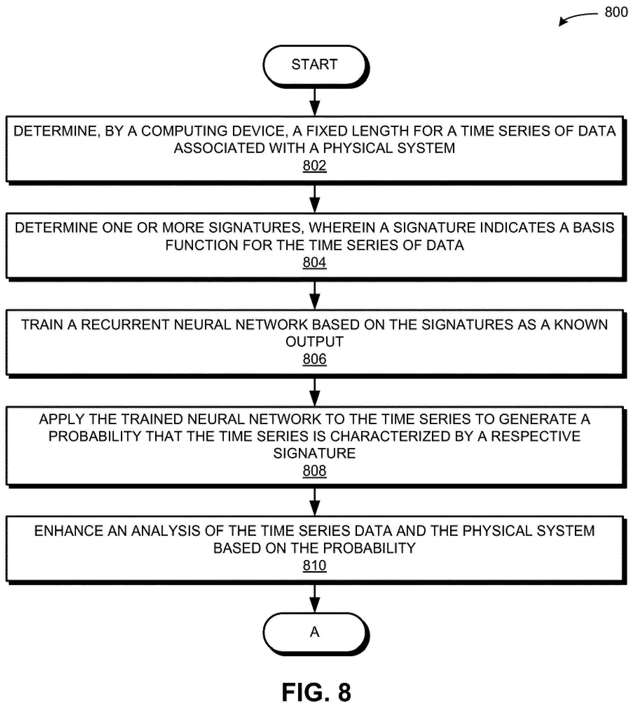

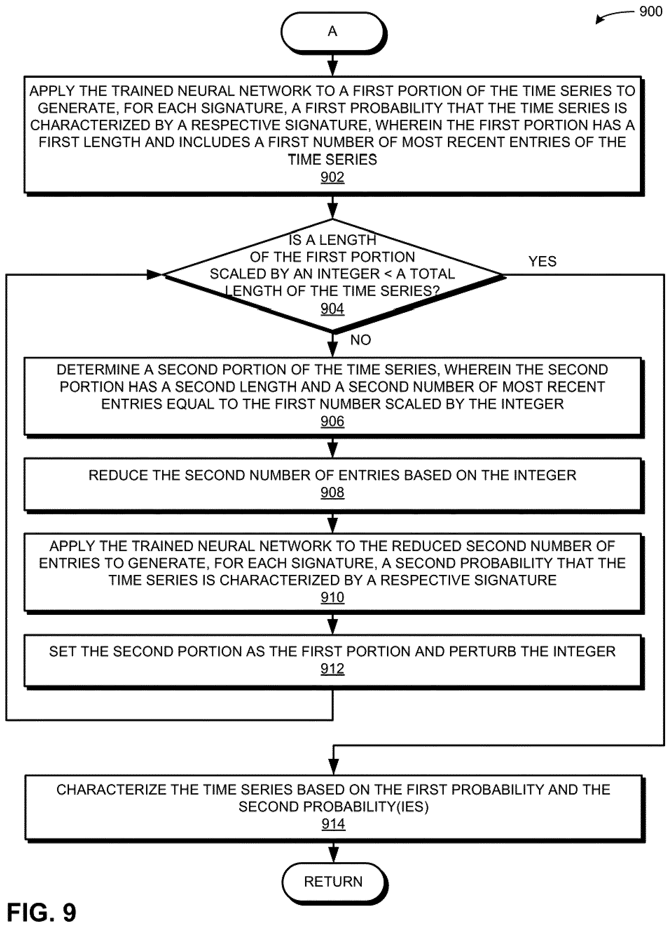

FIG. 8 presents a flow chart 800 illustrating a method for facilitating characterization of an arbitrary-length time series, in accordance with an embodiment of the present invention. During operation, the system determines, by a computing device, a fixed length for a time series of data associated with a physical system (operation 802). The system determines one or more signatures, wherein a signature represents a basis function for a known time series of data (operation 804). The system trains a recurrent neural network based on the signatures as a known output (operation 806). The system applies the trained neural network to the time series to generate a probability that the time series is characterized by a respective signature (operation 808), e.g., probability vector 620 of FIG. 6. The system enhances an analysis of the time series data and the physical system based on the probability (operation 810). The operation continues as described at Label A of FIG. 9.

The characterization of the time series of a fixed length may thus be represented as a probability vector of size *M,* where *M* is the number of pre-selected signatures (e.g., probability vector 620 of size *M* = 3 of FIG. 6). The characterization is also depicted as signature detector 610 of FIG. 6.

FIG. 9 presents a flow chart 900 illustrating a method for facilitating characterization of an arbitrary-length time series, in accordance with an embodiment of the present invention. During operation, the system applies the trained neural network to a first portion of the time series to generate, for each signature, a first probability that the time series is characterized by a respective signature, wherein the first portion has a first length and includes a first number of most recent entries of the time series (operation 902). The system determines if the length of the first portion scaled by an integer is less than a total length of the time series (decision 904) (e.g., *H* * *L < Q* as in FIG. 7).

If the length of the first portion scaled by the integer is not less than the total length of the time series, the system determines a second portion of the time series, wherein the second portion has a second length and a second number of most recent entries equal to the first number scaled by the integer (operation 906). The system reduces the second number of entries based on the integer (operation 908) (i.e., downsampling as described above in relation to FIG. 7). The system applies the trained neural network to the reduced second number of entries to generate, for each signature, a second probability that the time series is characterized by a respective signature (operation 910). The system sets the second portion as the first portion and perturbs the integer (operation 912), (e.g., *H* = *H* + 1 as in FIG. 7). The operation returns to decision 904. If the length of the first portion scaled by the (perturbed) integer is less than the total length of the time series (decision 904), the system characterizes the time series based on the first probability and the second probability(ies) (operation 914).

The characterization of the time series of an arbitrary length may thus be represented as a probability vector of size *N* * *M,* where *N* is the number of times that input data is passed through the signature detector to obtain an output probability vector of size *M*, and *M* is the number of pre-selected signatures (e.g., probability vector 780 of size *N* * *M* = 4 * 3 = 12 of FIG. 7).

### Exemplary Computer and Communication System

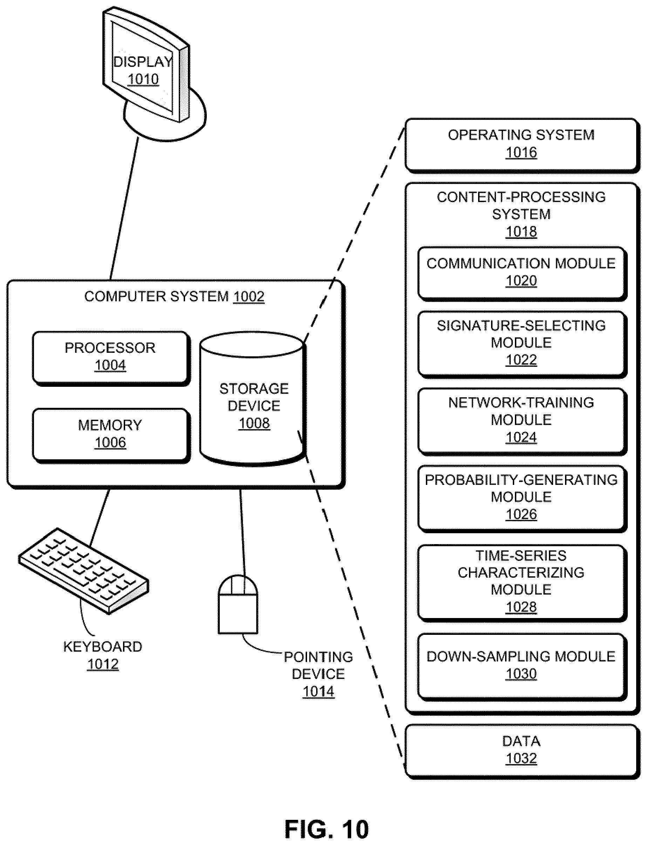

FIG. 10 illustrates an exemplary distributed computer and communication system 1002 that facilitates characterization of an arbitrary-length time series, in accordance with an embodiment of the present invention. Computer system 1002 includes a processor 1004, a memory 1006, and a storage device 1008. Memory 1006 can include a volatile memory (e.g., RAM) that serves as a managed memory, and can be used to store one or more memory pools. Furthermore, computer system 1002 can be coupled to a display device 1010, a keyboard 1012, and a pointing device 1014. Storage device 1008 can store an operating system 1016, a content-processing system 1018, and data 1032.

Content-processing system 1018 can include instructions, which when executed by computer system 1002, can cause computer system 1002 to perform methods and/or processes described in this disclosure. Specifically, content-processing system 1018 may include instructions for sending and/or receiving data packets to/from other network nodes across a computer network (communication module 1020). A data packet can include time series data, training data, synthetic data, a vector, a selected length, and selected signatures.

Content-processing system 1018 can further include instructions for determining one or more signatures, wherein a signature indicates a basis function for a time series of data (signature-selecting module 1022). Content-processing system 1018 can include instructions for training a neural network based on the signatures as a known output (network-training module 1024). Content-processing system 1018 can also include instructions for applying the trained neural network to the time series to generate a probability that the time series is characterized by a respective signature (probability-generating module 1026). Content-processing system 1018 can include instructions for enhancing an analysis of the time series data and the physical system based on the probability (time-series characterizing module 1028).

Furthermore, content-processing system 1018 can include instructions for applying the trained neural network to a first portion of the time series to generate, for each signature, a first probability that the time series is characterized by a respective signature, wherein the first portion has a first length and includes a first number of most recent entries of the time series (probability-generating module 1026). Content-processing system 1018 can include instructions for determining a second portion of the time series, wherein the second portion has a second length and includes a second number of most recent entries of the time series (time-series characterizing module 1028). Content-processing system 1018 can also include instructions for reducing the second number of entries (down-sampling module 1030). Content-processing system 1018 can include instructions for applying the trained neural network to the reduced second number of entries to generate, for each signature, a second probability that the time series is characterized by a respective signature (probability-generating module 1026). Content-processing system 1018 can additionally include instructions for characterizing the time series based on the first probability and the second probability (time-series characterizing module 1028).

Data 1032 can include any data that is required as input or that is generated as output by the methods and/or processes described in this disclosure. Specifically, data 1032 can store at least: a signature; a basis function; a time series; a length; a neural network; a recurrent neural network; a trained network; an input; an input time series; an output; an output vector; a one-hot vector; an index; a probability vector; a positive integer; a portion of a time series; a probability vector which indicates a probability for each signature that a time series is characterized by a respective signature; a most recent number of entries of a time series; a reduced number of entries; a downsampling algorithm; data generated from signatures; a relative proportion or weight for each signature that the time series is characterized by a respective signature; and a comparison of one signature to multiple signatures.

The data structures and code described in this detailed description are typically stored on a computer-readable storage medium, which may be any device or medium that can store code and/or data for use by a computer system. The computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing computer-readable media now known or later developed.

The methods and processes described in the detailed description section can be embodied as code and/or data, which can be stored in a computer-readable storage medium as described above. When a computer system reads and executes the code and/or data stored on the computer-readable storage medium, the computer system performs the methods and processes embodied as data structures and code and stored within the computer-readable storage medium.

Furthermore, the methods and processes described above can be included in hardware modules or apparatus. The hardware modules or apparatus can include, but are not limited to, application-specific integrated circuit (ASIC) chips, field-programmable gate arrays (FPGAs), dedicated or shared processors that execute a particular software module or a piece of code at a particular time, and other programmable-logic devices now known or later developed. When the hardware modules or apparatus are activated, they perform the methods and processes included within them.

## Claims

1. A computer-implemented method for facilitating characterization of a time series of data associated with a physical system, the method comprising:
determining, by a computing device, one or more signatures, wherein a signature indicates a basis function for a known time series of data;
training a neural network based on the signatures as a known output;
applying the trained neural network to the time series to generate a probability that the time series is **characterized by** a respective signature; and
enhancing an analysis of the time series data and the physical system based on the probability.

2. The method of claim 1, further comprising:
applying the trained neural network to a first portion of the time series to generate, for each signature, a first probability that the time series is **characterized by** a respective signature, wherein the first portion has a first length and includes a first number of most recent entries of the time series;
determining a second portion of the time series, wherein the second portion has a second length and includes a second number of most recent entries of the time series;
reducing the second number of entries;
applying the trained neural network to the reduced second number of entries to generate, for each signature, a second probability that the time series is **characterized by** a respective signature; and
characterizing the time series based on the first probability and the second probability.

3. The method of claim 2, wherein determining the second portion, reducing the second number of entries, and applying the trained neural network to the reduced second number of entries are in response to determining that a length of the first portion scaled by an integer is less than a total length of the time series, and wherein the method further comprises:
setting the second portion as the first portion; and
perturbing the integer,
wherein characterizing the time series is further based on one or more second probabilities.

4. The method of claim 2, wherein the second number is equal to the first number scaled by an integer, wherein reducing the second number of entries is based on the integer, and
wherein the time series is of an arbitrary length.

5. The method of claim 1, wherein the time series is of a fixed length.

6. The method of claim 1, wherein the network is trained based on one or more of:
data generated from the signatures;
an input which is a time series corresponding to a signature; and
an output which is a one-hot vector of a size equal to a number of determined signatures, wherein a vector entry with a value equal to one corresponds to an index associated with a signature.

7. The method of claim 1, wherein the generated probability indicates a relative proportion or weight for each signature that the time series is **characterized by** the respective signature, wherein the relative proportion or weight is a comparison of the respective signature to all the determined signatures.

8. The method of claim 1, wherein the neural network is a recurrent neural network.

9. A computer system for facilitating characterization of a time series of data associated with a physical system, the computer system comprising:
a processor; and
a storage device storing instructions that when executed by the processor cause the processor to perform a method, the method comprising:
determining one or more signatures, wherein a signature indicates a basis function for a known time series of data;
training a neural network based on the signatures as a known output;
applying the trained neural network to the time series to generate a probability that the time series is **characterized by** a respective signature; and
enhancing an analysis of the time series data and the physical system based on the probability.

10. The computer system of claim 9, wherein the method further comprises:
applying the trained neural network to a first portion of the time series to generate, for each signature, a first probability that the time series is **characterized by** a respective signature, wherein the first portion has a first length and includes a first number of most recent entries of the time series;
determining a second portion of the time series, wherein the second portion has a second length and includes a second number of most recent entries of the time series;
reducing the second number of entries;
applying the trained neural network to the reduced second number of entries to generate, for each signature, a second probability that the time series is **characterized by** a respective signature; and
characterizing the time series based on the first probability and the second probability.

11. The computer system of claim 10, wherein determining the second portion, reducing the second number of entries, and applying the trained neural network to the reduced second number of entries are in response to determining that a length of the first portion scaled by an integer is less than a total length of the time series, and wherein the method further comprises:
setting the second portion as the first portion; and
perturbing the integer,
wherein characterizing the time series is further based on one or more second probabilities.

12. The computer system of claim 10, wherein the second number is equal to the first number scaled by an integer, wherein reducing the second number of entries is based on the integer, and
wherein the time series is of an arbitrary length.

13. The computer system of claim 9, wherein the time series is of a fixed length.

14. The computer system of claim 9, wherein the network is trained based on one or more of:
data generated from the signatures;
an input which is a time series corresponding to a signature; and
an output which is a one-hot vector of a size equal to a number of determined signatures, wherein a vector entry with a value equal to one corresponds to an index associated with a signature.

15. The computer system of claim 9, wherein the generated probability indicates a relative proportion or weight for each signature that the time series is **characterized by** the respective signature, wherein the relative proportion or weight is a comparison of the respective signature to all the determined signatures.

16. The computer system of claim 9, wherein the neural network is a recurrent neural network..

17. A non-transitory computer-readable storage medium storing instructions that when executed by a computer cause the computer to perform a method, the method comprising:
determining, by a computing device, one or more signatures, wherein a signature indicates a basis function for a known time series of data;
training a neural network based on the signatures as a known output;
applying the trained neural network to a time series of data associated with a physical system to generate a probability that the time series is **characterized by** a respective signature; and
enhancing an analysis of the time series data and the physical system based on the probability.

18. The storage medium of claim 17, wherein the method further comprises:
applying the trained neural network to a first portion of the time series to generate, for each signature, a first probability that the time series is **characterized by** a respective signature, wherein the first portion has a first length and includes a first number of most recent entries of the time series;
determining a second portion of the time series, wherein the second portion has a second length and includes a second number of most recent entries of the time series;
reducing the second number of entries;
applying the trained neural network to the reduced second number of entries to generate, for each signature, a second probability that the time series is **characterized by** a respective signature; and
characterizing the time series based on the first probability and the second probability.

19. The storage medium of claim 18, wherein determining the second portion, reducing the second number of entries, and applying the trained neural network to the reduced second number of entries are in response to determining that a length of the first portion scaled by an integer is less than a total length of the time series, and wherein the method further comprises:
setting the second portion as the first portion; and
perturbing the integer,
wherein characterizing the time series is further based on one or more second probabilities.

20. The storage medium of claim 18, wherein the second number is equal to the first number scaled by an integer, wherein reducing the second number of entries is based on the integer, and
wherein the time series is of an arbitrary length.
